# EUROPÄISCHE PATENTSCHRIFT

(11) **EP 3 033 177 B1**
(45) Veröffentlichungstag und Bekanntmachung des Hinweises auf die Patenterteilung: **26.04.2023**
(21) Anmeldenummer: 14750346.0
(22) Anmeldetag: 06.08.2014
(51) Int. Cl.: B02C 13/06, B02C 9/00, B02C 13/286, A01M 17/00

(54) **QUERSTROM-PRALLVORRICHTUNG**
TRANSVERSE FLOW IMPACT DEVICE
DISPOSITIF DE RENVOI À ÉCOULEMENT TRANSVERSAL

(30) Priorität: 13.08.2013 EP 13180267
(43) Veröffentlichungstag der Anmeldung: 22.06.2016
(73) Patentinhaber: Bühler AG, 9240 Uzwil (CH)
(72) Erfinder: MOOSMANN, Jürgen, 88276 Berg (DE); MEILE, Andreas, CH-8370 Sirnach (CH)
(74) Vertreter: Hepp Wenger Ryffel AG
(86) Internationale Anmeldenummer: PCT/EP2014/066930
(87) Internationale Veröffentlichungsnummer: WO 2015/022251

(56) Entgegenhaltungen:
- WO-A1-91/11260
- CN-A- 102 744 122
- US-A- 3 102 781

## Beschreibung

Die Erfindung betrifft eine Prallvorrichtung und ein Verfahren zur Inaktivierung von Insekten in einem schüttfähigen Futteroder Lebensmittel mit einer derartigen Vorrichtung.

Als "schüttfähiges Futter- oder Lebensmittel" im Sinne der vorliegenden Erfindung sind pulver- und granulatförmige Futter- bzw. Lebensmittel und Mischungen davon gemeint, noch bevorzugter Müllereiprodukte wie Mehl, Griess, Dunst, Stärke usw., bei welchen ein Befall von Insekten nicht erwünscht ist.

Als "Insekt" im Sinne der vorliegenden Erfindung sind Insekten gemeint, welche sich in jedwedem Stadium der Entwicklung befinden, wie z.B. Insektenlarven, Insektenpuppen, erwachsene Insekte und insbesondere Insekteneier, sich in dem schüttfähigem Futteroder Lebensmittel befinden.

Als "Inaktivierung" im Sinne der vorliegenden Erfindung wird insbesondere die Abtötung von Insekten und insbesondere Insekteneiern gemeint. Eine Abtötung ist jedoch nicht zwingend notwendig. Die Insekten können auch derart beschädigt werden, dass diese auch kurz nach Verlassen der erfindungsgemässen Vorrichtung bzw. Durchführen des erfindungsgemässen Verfahrens absterben. Wichtig ist, dass die Insekten das behandelte Futter- bzw. Lebensmittel nicht mehr befallen können.

Vorrichtungen dieser Gattung sind beispielsweise aus der WO 91/11260 der Anmelderin, Bühler AG CH-9240 Uzwil, bekannt und finden Anwendung bei der Inaktivierung von Insekten und insbesondere Insekteneier, welche üblicherweise in einem ähnlichen Grössenbereich wie das Futter- bzw. Lebensmittel (i.d.R zwischen 0,08 mm und 0,6 mm) liegen, eine ebenfalls dem Futter- bzw. Lebensmittel ähnliche dreidimensionale Form (i.d.R. oval) aufweisen und daher nicht vom Futter- bzw. Lebensmittel, z.B. mit Hilfe eines Sichters, getrennt werden können.

Wie in den Figuren 5 bis 8 der WO 91/11260 zu sehen wird das zu behandelnde Futter- oder Lebensmittel (nachfolgend zu behandelnde Gut) der Prallmaschine axial (40) im Bereich der Drehachse eines Pralltellers zugeführt und dann durch den sich schnell drehenden Prallteller umgelenkt und radial (41) nach aussen beschleunigt.

Dabei durchläuft das zu behandelnde Gut den Bereich des Pralltellers, im welchem eine Mehrzahl von Prallbolzen mit einem runden Querschnitt ausgebildet sind. Insekten, welche sich im zu behandelnden Gut befinden und sehr schlagempfindlich sind, durchlaufen ebenfalls diesen Bereich, werden dabei von den Prallbolzen erfasst und durch die Prallenergie zerstört.

Das behandelte Futter- bzw. Lebensmittel (nachfolgend behandelte Gut) wird dann von einer Wand des Gehäuses aufgefangen und strömt dann entlang dieser, bis es zu einer tangential zum Prallteller angeordneten Auslassöffnung gelangt und die Prallmaschine verlässt.

Eine solche Prallmaschine ist jedoch in vielerlei Hinsicht nicht zufriedenstellend, insbesondere weil diese nicht auf einfache Art und Weise an die Bedürfnisse eines Benutzers angepasst werden kann.

Zur Erhöhung einer Durchsatzleistung muss eine Prallmaschine mit grösserem Durchmesser des Pralltellers bereitgestellt werden, da aufgrund der axial-radialen Umlenkung des Gutes eine axiale Verlängerung der Prallmaschine nur begrenzt zielführend ist. Im Hinblick auf eine Vergrösserung des Durchmessers des Pralltellers sind jedoch Grenzen gesetzt, insbesondere weil die zusätzlich notwendige Antriebsleistung nicht im Verhältnis zur Erhöhung der Durchsatzleistung steht. Im Ergebnis werden zur Erhöhung der Durchsatzleistung eine oder mehrere Prallmaschinen parallel geschaltet.

Strömungstechnisch ist eine solche Prallmaschine ebenfalls nicht als optimal zu bezeichnen. Aufgrund der axial-radialen Umlenkung des Gutes und der Gestaltung der Prallbolzen entsteht eine turbulente Strömung, welche die mittlere Verweilzeit des Gutes in der Prallmaschine erhöht. Dies wiederum beeinflusst die Korngrössenverteilung des Gutes, welche jedoch möglichst unverändert bleiben sollte.

Es ist daher Aufgabe der Erfindung, eine Vorrichtung und ein Verfahren der eingangs genannten Art anzugeben, welche die Nachteile des Bekannten vermeiden und insbesondere einfach und kostengünstig an die Bedürfnisse eines Benutzers angepasst werden können.

Die erfindungsgemässe Vorrichtung und das erfindungsgemässe Verfahren sollen ferner die Strömungseigenschaften verbessern, die Korngrössenverteilung nicht wesentlich verändern, die Prozessauslegung vereinfachen und trotzdem eine sichere und nahezu vollständige Inaktivierung von Insekten gewährleisten.

Diese Aufgabe wird mit den Merkmalen der unabhängigen Ansprüche gelöst.

Die Schaufelelemente erster Art erstrecken sich zwischen den zwei Stirnteilen in etwa parallel zur Drehachse der Trommel. Abweichungen von der Parallelität sind jedoch fertigungsbedingt möglich. Auch kann es vorgesehen werden, dass die Schaufelelemente erster Art eine Krümmung aufweisen derart, dass der radiale Abstand zur Drehachse an den den Stirnteilen zugewandten Endbereichen des Schaufelelementes erster Art grösser ist als der radiale Abstand zur Drehachse in der Mitte des Schaufelelementes erster Art. Damit kann einer fliehkraftbedingten Aufweitung der Trommel beim Betrieb entgegengewirkt werden.

Als Prallfläche eines Schaufelelementes ist diejenige Fläche gemeint, auf welche beim Betrieb der erfindungsgemässen Vorrichtung der Aufprall des zu behandelnden Gutes und der Insekten stattfindet.

Die wenigstens eine Einlassöffnung und die wenigstens eine Auslassöffnung sind erfindungsgemäss in einer Wand eines Gehäuses angeordnet, welche die Trommel teilweise - d.h. mit Ausnahme der Bereiche, wo die Einlassöffnung und die Auslassöffnung angeordnet sind - umfänglich umgibt. Die Wand bildet somit eine Art Ummantelung der Trommel.

Das zu behandelnde Gut durchläuft eine erste Prallzone, welche von den Schaufelelementen erster Art gebildet wird, aufgrund der Gestaltung der Trommel mit zwei Stirnteilen und einer offenen, für das zu behandelnden Gut durchlässige Mantelfläche und der Anordnung der wenigstens einer Einlassöffnung und der wenigstens einer Auslassöffnung, welche ein im Wesentlichen radiales Zuund Abführen des Gutes ermöglichen, zweimal.

Die Strömungseigenschaften des zu behandelnden Gutes sind aufgrund der fehlenden axial-radialen Umlenkung weniger turbulent als bei Vorrichtungen nach dem Stand der Technik. Dadurch kann die mittlere Verweilzeit des zu behandelnden Gutes verringert werden, was zum einen zu einer besseren Prozessauslegung führt, zum anderen die Korngrössenverteilung nicht wesentlich verändert. Das im Wesentlichen radiale Zu- und Abführen des Gutes ermöglicht ausserdem eine bessere Anpassung der Vorrichtung an die gewünschte Durchsatzleistung, indem die Trommel in axialer Richtung nach Bedarf verlängert wird. Somit werden auch Energieeinsparungen beim Betrieb einer erfindungsgemässen Vorrichtung, insbesondere bei sehr hohen Durchsatzleistungen, möglich.

Weiter bevorzugt sind die wenigstens eine Einlassöffnung und die wenigstens eine Auslassöffnung zueinander bezüglich der Drehachse um mehr als 90° und weniger als 270°, vorzugsweise um etwa 180° versetzt angeordnet.

Damit wird ein im Wesentlichen geradliniger Verlauf des Gutes, zumindest bezüglich des Gehäuses, ermöglicht, da innerhalb der Trommel das Gut aufgrund des Prallvorganges eine quasi bogenförmige Bahn beschreibt, ohne die Strömungstechnisch unerwünschte axial-radiale Umlenkung der Vorrichtungen nach dem Stand der Technik zu erfahren.

Die Schaufelelemente erster Art weisen vorzugsweise eine im Wesentlichen ebene Prallfläche auf. Als im Wesentlichen ebene Prallfläche ist eine Prallfläche gemeint, welche z.B. durch eine leichte Wölbung oder eine Strukturierung der Oberfläche von einer perfekten ebenen Fläche abweichen kann. Durch die im Wesentlichen ebene Prallfläche kann das Prallverhalten und somit die Strömungseigenschaften des zu behandelnden Gutes noch weiter verbessert werden. Die Prallfläche weist bevorzugt eine Breite - d.h. eine quer zur Drehachse räumliche Ausdehnung - von 5 mm bis 25 mm, noch bevorzugter zwischen 10 mm und 20 mm, auf.

Weiter bevorzugt weisen die Schaufelelemente erster Art einen im Wesentlichen viereckigen Querschnitt auf. Dies schliesst nicht aus, dass z.B. die Kanten des Schaufelelementes erster Art eine Abrundung oder Anfasung aufweisen können. Somit kann eine einfache Herstellung einer Trommel ermöglicht werden, da auf Standardprofile zurückgegriffen werden kann.

Die Schaufelelemente erster Art werden mit den Stirnteilen fest verbunden, insbesondere verschweisst. Alternativ oder zusätzlich ist es möglich, die Schaufelelemente erster Art in entsprechend geformte Vertiefungen und/oder Öffnungen der Stirnteile einzufügen und diese dann zu verschweissen oder anderweitig, z.B. mit bekannten Befestigungsmitteln wie Schrauben und dgl. zu befestigen. Die Trommel kann auch zumindest teilweise durch Formgiessen hergestellt werden. Je nach Bemassung der Trommel kann auch vorgesehen werden, dass die Schaufelelemente erster Art nur mit einem der beiden Stirnteile, insbesondere mit dem antriebsseitig angeordneten Stirnteil, fest verbunden sind.

Noch weiter bevorzugt erstrecken sich die Schaufelelemente erster Art im Wesentlichen geradlinig zwischen den zwei Stirnteilen. Es ist ebenfalls denkbar, dass die Schaufelelemente erster Art in axialer Richtung der Trommel zumindest teilweise einen wendel- oder spiralförmigen Verlauf aufweisen.

Noch bevorzugter ist die Prallfläche der Schaufelelemente erster Art zwischen 0° und 45° bezüglich des Radius der Trommel geneigt. Das bedeutet dass die Ebene, welche die Prallfläche definiert oder zumindest im Wesentlichen charakterisiert, z. B. weil die Prallfläche strukturiert ausgeführt ist, leicht gewölbt ist oder am Rande angefast oder abgerundet ist, und ein Radius der Trommel, welcher die Prallfläche schneidet, einen spitzen Winkel mit einem Winkelabstand zwischen 0° und 45° bilden. Noch weiter bevorzugt beträgt dieser Winkelabstand zwischen 0° und 10°.

Die Schaufelelemente erster Art sind ferner bevorzugt derart angeordnet, dass die Prallfläche "nach unten" - d.h. zur Drehachse der Trommel hin gerichtet - zeigt. Mit einer solchen Anordnung der Schaufelelemente erster Art wird Erreicht, dass die Strömungseigenschaften des zu behandelnden Gutes noch weiter verbessert werden, indem der Aufprall mit der Prallfläche sowohl beim Zu- als auch beim Abführen bei einem optimalen Winkel erfolgt. Gleichwohl bleiben die Strömungseigenschaften weniger turbulent als bei Vorrichtungen nach dem Stand der Technik, mit der Folge der bereits oben erwähnten Vorteile.

Noch ferner bevorzugt sind die Schaufelelemente erster Art bezüglich der Drehachse radial im Wesentlichen gleich beabstandet angeordnet. Die Schaufelelemente erster Art liegen somit auf einer gedachten Mantelfläche eines Kreiszylinders. Noch bevorzugter sind benachbarte Schaufelelemente erster Art voneinander im Wesentlichen gleich beabstandet angeordnet. Diese bevorzugten Ausführungen ermöglichen eine im Wesentlichen gleich bleibende Durchsatzleistung des zu behandelnden Gutes über den ganzen Umfang der Trommel, ohne dass es zur Gutstaubildung im Bereich der Einlassöffnung und/oder der Auslassöffnung und/oder innerhalb der Trommel kommt.

Eine noch ferner bevorzugte Ausführungsform der Erfindung sieht vor, dass zwischen den Stirnteilen der Trommel eine Mehrzahl von sich in etwa parallel zur Drehachse erstreckenden Schaufelelementen zweiter Art angeordnet ist.

An dieser Stelle sei es angemerkt, dass die oben erwähnten Vorteile betreffend die Aus- und Weiterbildungen der Schaufelelemente erster Art ebenfalls auf die Schaufelelemente zweiter Art Anwendung finden können.

Die Schaufelelemente zweiter Art weisen bevorzugt ebenfalls eine Schaufelfläche auf, welche bevorzugter im Wesentlichen flach ausgebildet ist und noch bevorzugter ebenfalls als Prallfläche dienen kann, als auch eine schräge Fläche, wobei die Schaufelfläche und die schräge Fläche an einer Kante, vorzugsweise an einer scharfen Kante, treffen, die in einer Umdrehungsrichtung der Trommel zeigt. Die Schaufelfläche weist bevorzugt eine Breite - d.h. eine quer zur Drehachse räumliche Ausdehnung - von 5 mm bis 25 mm, noch bevorzugter zwischen 10 mm und 20 mm, auf. Noch bevorzugter entspricht die Breite der Schaufelfläche der Schaufelelemente zweiter Art im Wesentlichen der der Prallfläche der Schaufelelemente erster Art.

Die Schaufelelemente zweiter Art weisen bevorzugt einen im Wesentlichen trapezförmigen, insbesondere einen orthogonaltrapezförmigen Querschnitt auf. Dieser Querschnitt kann die Strömungseigenschaften des zu behandelnden Gutes positiv beeinflussen, insbesondere wenn die Schaufelelemente zweiter Art im Randbereich der Trommel angeordnet sind.

Die Schaufelelemente zweiter Art werden bevorzugt aus dem gleichen viereckigen Standardprofil wie die Schaufelelemente erster Art gefertigt, indem eine Kante des viereckigen Standardprofils spanend bearbeitet wird zur Bildung einer bezüglich der Grundflächen des Standardprofils schiefen Fläche.

Noch bevorzugter erstrecken sich die Schaufelelemente zweiter Art im Wesentlichen geradlinig zwischen den zwei Stirnteilen. Die Schaufelelemente zweiter Art müssen jedoch nicht zwangsläufig den gleichen Verlauf wie die Schaufelelemente erster Art aufweisen. Es kann z.B. vorgesehen werden, dass die Schaufelelemente erster Art sich mit einem wendel- oder spiralförmigen Verlauf erstrecken während die Schaufelelemente zweiter Art im Wesentlichen geradlinig verlaufen oder umgekehrt.

Noch bevorzugter ist die Schaufelfläche der Schaufelelemente zweiter Art zwischen 15° und 75° bezüglich des Radius der Trommel geneigt. Das bedeutet dass die Ebene, welche die Schaufelfläche definiert oder zumindest im Wesentlichen charakterisiert, z. B. weil die Schaufelfläche strukturiert ausgeführt ist, leicht gewölbt ist oder am Rande angefast oder abgerundet ist, und ein Radius der Trommel, welcher die Schaufelfläche schneidet, einen Winkel mit einem Winkelabstand zwischen 15° und 75° bilden. Noch weiter bevorzugt beträgt dieser Winkelabstand zwischen 40° und 60°.

Die Schaufelelemente zweiter Art sind ferner bevorzugt derart angeordnet, dass die Prallfläche "nach unten" - d.h. zur Drehachse der Trommel hin gerichtet - zeigt.

Ferner bevorzugt sind die Schaufelelemente zweiter Art bezüglich der Drehachse radial im Wesentlichen gleich beabstandet angeordnet.

Noch weiter bevorzugt sind benachbarte Schaufelelemente zweiter Art voneinander im Wesentlichen gleich beabstandet angeordnet.

Eine noch weiter bevorzugte Ausführungsform sieht vor, dass die Schaufelelemente erster Art und die Schaufelelemente zweiter Art in Umlaufrichtung der Trommel jeweils abwechselnd angeordnet sind. Damit ist gemeint, dass mit Blick in radialer Richtung der Trommel, d. h. auf die Mantelfläche, jeweils ein Schaufelelement erster Art zwischen zwei Schaufelelementen zweiter Art und vice versa angeordnet ist. Demnach entspricht die Anzahl der Schaufelelemente erster Art der Anzahl der Schaufelelemente zweiter Art.

Ein Verhältnis von jeweils zwischen 40 und 70 Schaufelelementen erster bzw. zweiter Art pro 1 m Durchmesser der Trommel ist besonders bevorzugt.

Noch ferner bevorzugt sieht die Erfindung vor, dass die Schaufelelemente zweiter Art sich radial bezüglich der Drehachse ausserhalb der Schaufelelemente erster Art befinden. Das zu behandelnde Gut gelangt somit vom Bereich der Schaufelelemente zweiter Art, wo bereits eine Behandlung des Gutes stattfinden kann, zu den Schaufelelementen erster Art, wo dieses auf die Prallflächen trifft. Durch die beim Abprall entstehende Ablenkung und durch die Rotation der Trommel wird das Gut aus der Trommel heraus geschleudert und strömt dann entlang der Wand des Gehäuses in Richtung der Auslassöffnung.

Dabei kann bevorzugt vorgesehen werden, dass die grösste radiale Ausdehnung der Schaufelelemente erster Art im Wesentlichen der kleinsten radialen Ausdehnung der Schaufelelemente zweiter Art entspricht.

Durch eine solche bevorzugte Anordnung der Schaufelelemente erster und zweiter Art kommt bei der erfindungsgemässen Vorrichtung das Grundprinzip eines Querstromventilators zur Anwendung. Die Schaufelelemente zweiter Art erzeugen einen leichten Sog, so dass das zu behandelnden Gut in das Gehäuse und schliesslich in die Trommel gelangt.

Die Trommel muss jedoch im Gegensatz zu einem Querstromventilator eine zu hohe Verwirbelung der Luft vermeiden, da sonst die Strömungseigenschaften innerhalb der Trommel zu turbulent werden und die mittlere Verweilzeit verlängert wird. Auch ist es wichtig, dass sich insbesondere im Bereich der Einlassöffnung kein Luftkissen bildet, das ein Zuführen des Gutes verhindert und im schlimmsten Fall das Gut derart verdichten kann, dass es eine Zuführleitung verstopft.

Die Prallenergie, welche zur Inaktivierung der Insekten notwendig ist, entsteht im Wesentlichen bei Abprall auf die Prallfläche der Schaufelelemente erster Art. Die Schaufelfläche der Schaufelelemente zweiter Art kann jedoch ebenfalls, je nach Anordnung, die Inaktivierung durch Abprall auf die Schaufelfläche ermöglichen.

Noch bevorzugter weist die Wand des Gehäuses, welche die Trommel umfänglich umgibt, im Wesentlichen die Form einer Mantelfläche eines Kreiszylinders auf. Ausnahmen können die Bereiche der wenigstens einen Einlassöffnung und der wenigstens einen Auslassöffnung bilden, welche Strömungstechnisch, z.B. zur Vermeidung von Aufwirbelungen der Luft und/oder des Gutes, oder zum besseren Abführen des Gutes optimiert sein können.

Noch weiter bevorzugt beträgt eine Spaltbreite zwischen der Wand des Gehäuses, welche die Trommel umfänglich umgibt, und der Schaufelelemente erster und/oder zweiter Art, welche sich radial am äussersten befinden, vorzugsweise zwischen 5 mm und 20 mm, noch bevorzugter zwischen 10 mm und 15 mm.

Die Wand, welche die Trommel umfänglich umgibt, kann im Bereich der wenigstens einen Einlassöffnung und/oder der wenigstens einen Auslassöffnung mit Abstreifelementen versehen werden.

Die Abstreifelemente im Bereich der wenigstens einen Einlassöffnung sind derart angeordnet, dass das zu behandelnde Gut in die Trommel hinein und nicht in den Spalt zwischen Trommel und Wand gelangt. Somit wird gewährleistet, dass eine Gutströmung die Trommel durchläuft und wenigstens zweimal von den Prallflächen der Schaufelelemente erster und/oder zweiter Art erfasst wird.

Die Abstreifelemente im Bereich der wenigstens einen Auslassöffnung sind derart angeordnet, dass das nun behandelte Gut aus dem Gehäuse heraus gefördert wird. Somit wird gewährleistet, dass das nun behandelte Gut die Vorrichtung verlässt und damit die mittlere Verweilzeit nicht negativ beeinflusst wird.

Die bezüglich der Drehachse radiale Spaltbreite zwischen Abstreifelement und Schaufelelement erster und/oder zweiter Art beträgt vorzugsweise zwischen 0,5 mm und 5 mm, bevorzugter zwischen 1 mm und 3 mm.

Zur Erhöhung der Stabilität der Trommel ist vorzugsweise vorgesehen, dass zwischen den Stirnteilen weitere Verstärkungselemente vorgesehen sind, welche mit den Schaufelelementen erster und/oder zweiter Art verbunden sind und im Betrieb einer radialen Ausweitung der Schaufelelemente erster und/oder zweiter Art entgegenwirken.

Die Verstärkungselemente sind vorzugsweise als kreisringförmige Scheibe ausgebildet.

Weiter bevorzugt sind die Stirnteile als im Wesentlichen geschlossene Fläche ausgebildet. Das schliesst nicht aus, dass eventuell Öffnungen vorhanden sein können, z.B. zum Anflanschen eines Antriebs oder zum Befestigen der Schaufelelemente erster und/oder zweiter Art.

Die erfindungsgemässe Vorrichtung kann in einer weiter bevorzugten Ausführungsform auch in einer Anlage mit pneumatischem Fördersystem betrieben werden. Dabei kann bevorzugt vorgesehen werden, dass die Drehachse der Trommel nicht wie gewöhnlich waagerecht sondern auch lotrecht oder beliebig geneigt angeordnet werden kann.

Die wenigstens eine Einlassöffnung und die wenigstens eine Auslassöffnung erstrecken sich vorzugsweise im Wesentlichen über die gesamte axiale Länge der Trommel. Alternativ können mehrere Einlassöffnungen und/oder mehrere Auslassöffnungen vorgesehen sein, welche sich noch bevorzugter ebenfalls im Wesentlichen über die gesamte axiale Länge der Trommel erstrecken.

Noch weiter bevorzugt ist die bezüglich der Trommel axiale Ausdehnung der wenigstens einen Einlassöffnung kleiner als die axiale Ausdehnung der Schaufelelemente erster und/oder zweiter Art. Noch bevorzugter beträgt dieser Unterschied im Bereich der Stirnteile jeweils zwischen 1 mm und 25 mm, noch weiter bevorzugt zwischen 3 mm und 13 mm. Somit wird verhindert, dass das zu behandelnde Gut beim Einströmen in die Vorrichtung in einen Spalt zwischen dem jeweiligen Stirnteil und einer Gehäusestirnwand gelangt.

Der Durchmesser der Trommel beträgt bei einer bevorzugten Ausführungsform zwischen 300 mm und 600 mm. Dabei ist eine axiale Länge von 60 mm bis 600 mm bevorzugt, was eine Durchsatzleistung von zu behandelndem Gut von bis zu 50 Tonnen pro Stunde ermöglicht.

Eine Drehzahl der Trommel wird, je nach Ausführungsform, derart gewählt, dass die Prallfläche der Schaufelelemente erster Art und/oder die Schaufelfläche der Schaufelelemente zweiter Art eine Umfangsgeschwindigkeit von mehr als 60 m/s, bevorzugt zwischen 65 m/s und 85 m/s, noch bevorzugter zwischen 70 m/s und 80 m/s aufweist.

Die Erfindungsgemässe Vorrichtung sieht noch weiter bevorzugt vor, dass wenigstens zwei Trommeln axial nebeneinander miteinander verbunden werden zur Bildung einer Trommelanordnung. Die Trommeln werden bevorzugt an einer der beiden Stirnteile aneinander angeflanscht. Somit kann eine erfindungsgemässe Vorrichtung modular aufgebaut werden. Ferner kann das Gehäuse ebenfalls modular gestaltet sein. Durch aneinanderreihen von Trommeln und Gehäusemodule kann somit die Länge der Trommelanordnung an die gewünschte Durchsatzleistung angepasst werden.

Das erfindungsgemässe Verfahren mit einer vorstehend beschriebenen Vorrichtung zeichnet sich durch das Zuführen des zu behandelnden Gutes einer mit einer Mehrzahl von Prallflächen ausgestatteten, sich um eine Drehachse drehenden Trommel in im Wesentlichen bezüglich der Drehachse radialer Richtung aus.

Die Strömungseigenschaften sind aufgrund der fehlenden axial-radialen Umlenkung weniger turbulent als bei einem Verfahren nach dem Stand der Technik.

Das Gut verlässt dann die Trommel vorzugsweise nicht in axialer Richtung.

Als Querstromventilatorrotor kommen jegliche Vorrichtungen in Betracht, welche ein im Wesentlichen radiales Zuführen und Abführen von zu behandelndem Gut ermöglichen und insbesondere einen mehr oder weniger ausgeprägten Sog von zu behandelndem Gut erzeugen.

Die Erfindung wird nachfolgend anhand eines bevorzugten Ausführungsbeispiels in Verbindung mit den Zeichnungen besser erläutert. Es zeigen:
- Figur 1: eine perspektivische Schnittansicht einer bevorzugten Ausführungsform der Erfindung mit angeflanschtem Motor;
- Figur 2: einen Querschnitt durch eine Trommel einer zweiten bevorzugten Ausführungsform der Vorrichtung;

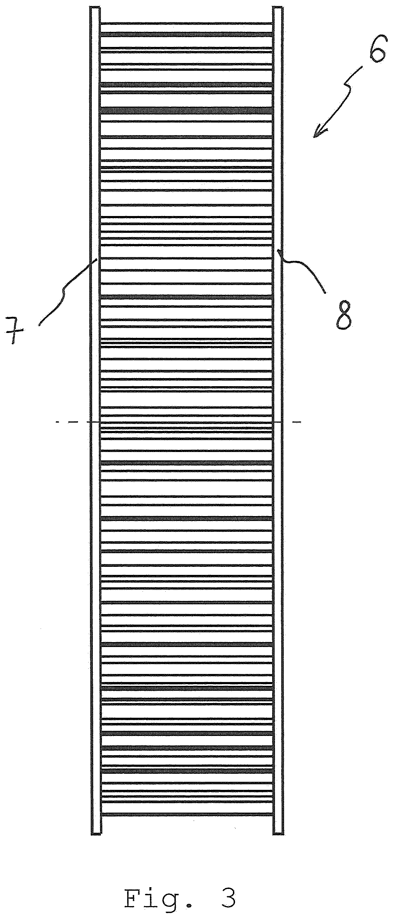

- Figur 3: eine Seitenansicht der Trommel der Figur 2;
- Figur 4: eine Detailansicht der Schaufelelemente;
- Figur 5: einen Querschnitt durch die Trommel und das Gehäuse einer zweiten Ausführungsform der erfindungsgemässen Vorrichtung;
- Figur 6: eine Seitenansicht einer dritten Ausführungsform der erfindungsgemässen Vorrichtung mit angeflanschtem Motor, wobei die Vorrichtung in Schnittansicht dargestellt ist.

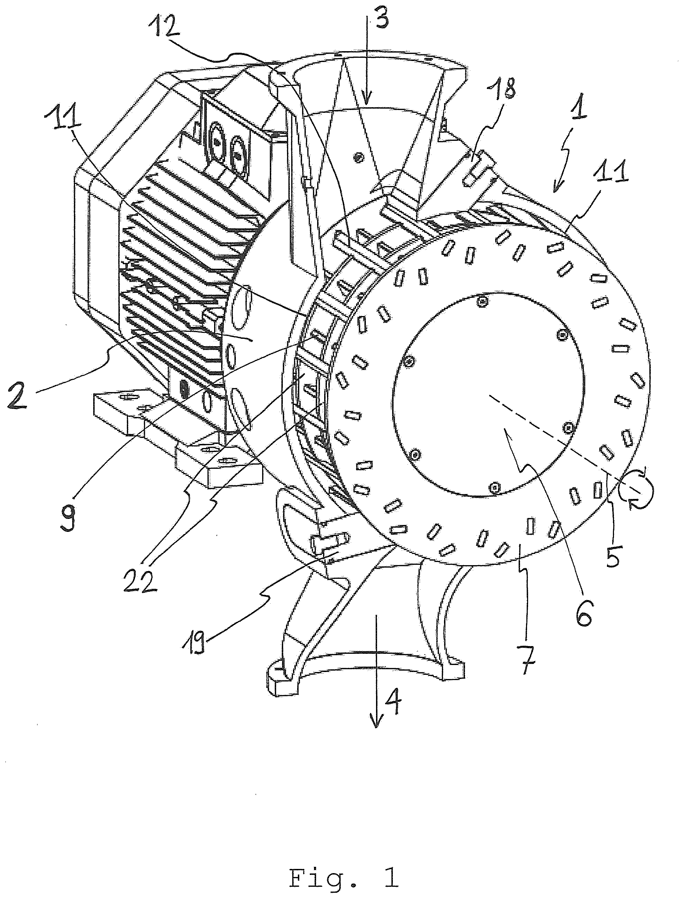

In der Figur 1 ist eine Vorrichtung 1 gezeigt, welche im Wesentlichen aus einem Gehäuse 2 und einer Trommel 6 besteht.

Das Gehäuse 2 kann je nach Anwendungszweck ein- oder mehrteilig ausgebildet sein.

Das Gehäuse 2 weist eine Einlassöffnung 3 und eine Auslassöffnung 4 zum Zu- und Abführen von zu behandelndem Gut auf, welche jeweils schematisch durch einen Pfeil dargestellt sind und sich im Wesentlichen über die gesamte axiale Länge der Trommel 6 erstrecken.

Die Einlassöffnung 3 und die Auslassöffnung 4 weisen bevorzugt über die gesamte axiale Länge der Trommel 6 im Wesentlichen jeweils eine gleich bleibende Breite auf.

Die Trommel 6 besteht aus zwei Stirnteilen 7 und 8, von denen nur der Stirnteil 7 in seiner Gesamtheit zu sehen ist.

Zwischen den Stirnteilen 7 und 8, d.h. in Längsrichtung der Trommel 6, erstreckt sich, im Wesentlichen parallel zu einer Drehachse 5 der Trommel 6, eine Mehrzahl von Schaufelelementen 9 und 12.

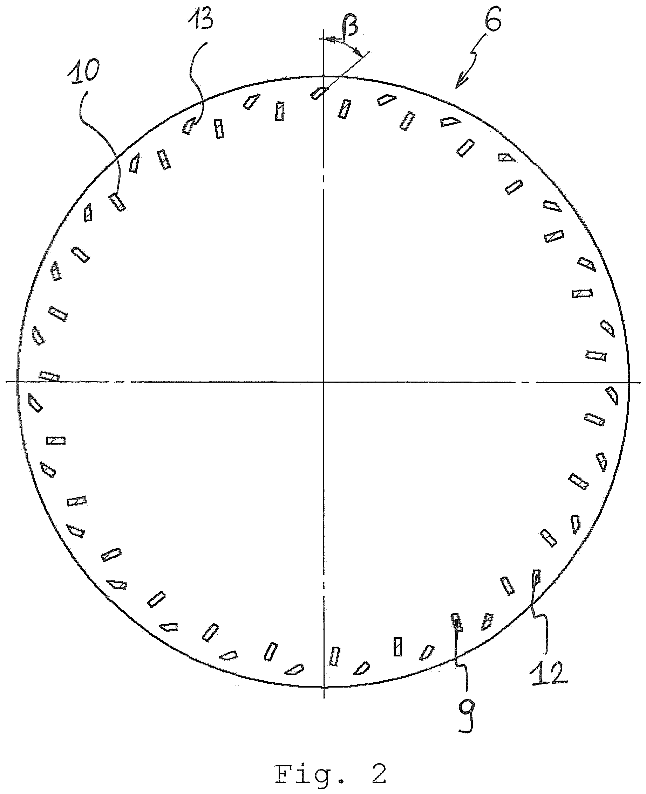

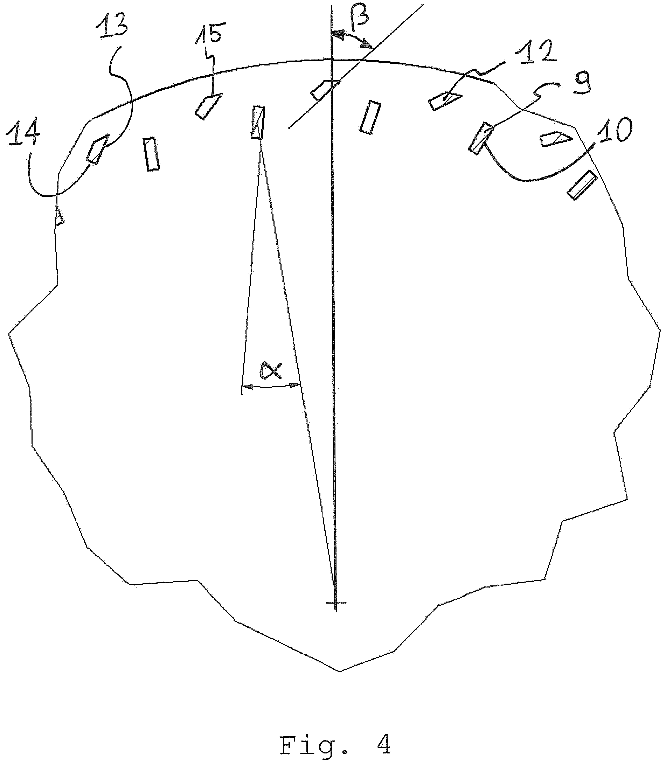

Diese Schaufelelemente sind in den Figuren 2, 4 und 5 besser sichtbar.

Zwei Arten von Schaufelelementen sind vorhanden, nämlich Schaufelelemente 9 erster Art und Schaufelelemente 12 zweiter Art, von welchen der Einfachheit halber nur einige mit Bezugszeichen versehen sind.

Die Schaufelelemente 9 erster Art weisen jeweils eine im Wesentlichen ebene Prallfläche 10 auf, sind jeweils gleichmässig um den Umfang der Trommel 6 verteilt und bilden einen ersten Schaufelbereich aus.

Die Schaufelelemente 12 zweiter Art weisen jeweils eine im Wesentlichen ebene Schaufelfläche 13 auf, sind jeweils gleichmässig um den Umfang der Trommel 6 verteilt und bilden einen zweiten Schaufelbereich aus. Die Schaufelelemente 12 zweiter Art weisen jeweils auch eine ebene oder bogenförmige schräge Fläche 15 auf, wobei die Schaufelfläche 13 und die schräge Fläche 15 an einer messerscharfen Kante treffen, die in der Umdrehungsrichtung der Trommel zeigt.

Schaufelelemente 9 erster Art und Schaufelelemente 12 zweiter Art sind jeweils konzentrisch mit der Drehachse 5 als Zentrum angeordnet, wobei die Schaufelelemente 12 zweiter Art radial betrachtet sich ausserhalb der Schaufelelemente 9 erster Art befinden.

Die Schaufelelemente 9 erster Art weisen einen im Wesentlichen viereckigen Querschnitt auf, wobei die quer zur Längsrichtung des Schaufelelementes 9 erster Art breiteste Fläche die Prallfläche 10 ausbildet.

Die Schaufelelemente 12 zweiter Art weisen einen im Wesentlichen orthogonaltrapezförmigen Querschnitt auf, wobei die breiteste der zueinander parallelen Flächen (Grundflächen) des Schaufelelementes 12 zweiter Art die Prallfläche 13 ausbildet.

Die zu den beiden Grundflächen der Schaufelelemente 12 zweiter Art senkrechte Fläche 14 weist zur Drehachse 5 der Trommel 6 hin, ist also radial betrachtet weniger von der Drehachse 5 als die andere, nicht zu den beiden Grundflächen der Schaufelelemente 12 zweiter Art senkrechte (also schräge) Fläche 15 beabstandet.

Der Winkelabstand α zwischen einer von der Prallfläche 9 definierten Ebene und einem Radius der Trommel 6, welcher durch den Schwerpunkt des Schaufelelementes 9 erster Art verläuft, beträgt etwa 0° bis 10°.

Der Winkelabstand β zwischen einer von der Schaufelfläche 13 definierten Ebene und einem Radius der Trommel 6, welcher im Wesentlichen normal zur schrägen Fläche 15 des Schaufelelementes 12 zweiter Art verläuft, beträgt etwa 40° bis 60°.

Die Schaufelelemente 9 erster Art und die Schaufelelemente 12 zweiter Art sind derart angeordnet, dass die Prallfläche 9 und Schaufelfläche 13 jeweils der Drehachse zugewandt sind.

Die Anzahl der Schaufelelemente 9 erster Art entspricht der Anzahl der Schaufelelemente 12 zweiter Art. In diesem Fall sind jeweils 27 Schaufelelemente erster bzw. zweiter Art bei einem Durchmesser der Trommel von 500 mm vorhanden

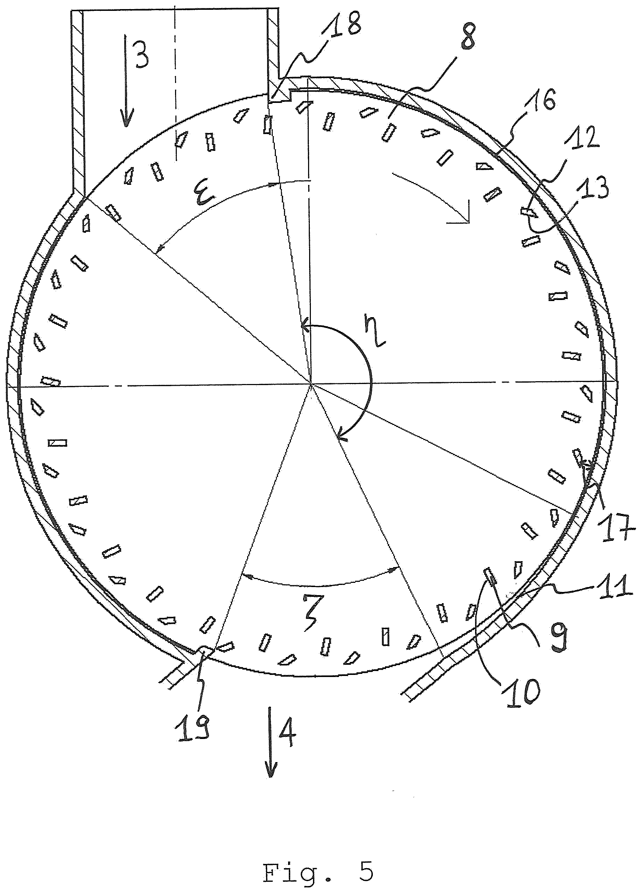

Die Trommel 6, wie aus der Figur 5 ersichtlich, ist im Wesentlich von einer Wand 11 eines Gehäuses 2 umfänglich umgeben.

Die Spaltbreite 16 zwischen der Wand 11 und der äussersten Abmessung des Stirnteils 7 beträgt bevorzugt zwischen 1 mm und 10 mm.

Der kleinste radiale Abstand 17 zwischen der Wand 11 und der schrägen Fläche 15 beträgt bevorzugt zwischen 10 mm und 15 mm.

Im Bereich der Einlassöffnung 3 ist ein Abstreifelement 18 angeordnet, welches sich bevorzugt entlang der gesamten axialen Länge der Trommel 6 erstreckt.

Das Abstreifelement 18 ist vorzugsweise derart angeordnet, dass die radiale Spaltbreite zwischen Abstreifelement 18 und Schaufelelement zweiter Art 12 zwischen 1 mm und 3 mm beträgt.

Im Bereich der Auslassöffnung 4 ist ebenfalls ein Abstreifelement 19 angeordnet, welches sich bevorzugt entlang der gesamten axialen Länge der Trommel 6 erstreckt.

Das Abstreifelement 19 ist ebenfalls vorzugsweise derart angeordnet, dass die radiale Spaltbreite zwischen Abstreifelement 19 und Schaufelelement zweiter Art zwischen 1 mm und 3 mm beträgt.

Die Einlassöffnung 3 ist bevorzugt derart angeordnet, dass der Winkelabstand ε, welcher den die Einlassöffnung 3 freigebenden Bogenabschnitt der Wand 11 ausschneidet, zwischen 35° und 50° beträgt.

Die Auslassöffnung 4 ist bevorzugt derart angeordnet, dass der Winkelabstand ζ, welcher den die Auslassöffnung 4 freigebenden Bogenabschnitt der Wand 11 ausschneidet, zwischen 40° und 55° beträgt.

Die Einlassöffnung 3 und die Auslassöffnung 4 sind dabei zueinander derart angeordnet, dass der Winkelabstand η zwischen 155° und 170° beträgt.

Es entsteht somit eine im Wesentlichen umlenkungsfreie Durchführung des Gutes durch die Vorrichtung 1.

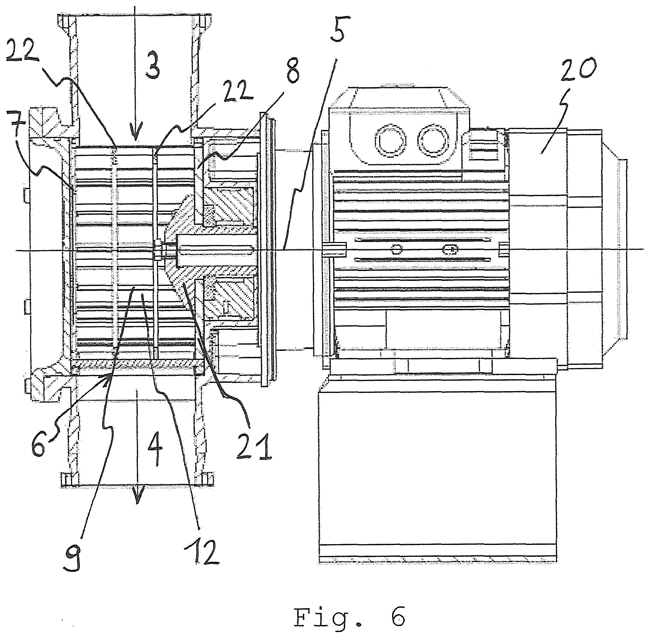

Aus der Figur 6 ist eine besondere Ausführungsform der Vorrichtung 1 zu sehen. Die Trommel 6 ist an einem Motor 20 über eine schematisch mit 21 bezeichnete Nabenanordnung 21 angeflanscht.

Aus den Figuren 1 und 6 ist sichtbar, dass die Trommel 6 fliegend nur an dem motorseitig angeordneten Stirnteil 8 gelagert ist.

Es kann jedoch vorgesehen werden, je nach axialer Länge und/oder Durchmesser der Trommel 6, dass eine Lagerung auch an dem nicht motorseitig angeordneten Stirnteil 7 erfolgt.

Zur Lagerung des Stirnteils 7 kann auch eine sich über die gesamte axiale Länge der Trommel 6 erstreckende Welle oder Achse zum Einsatz kommen.

Es sind ferner Verstärkungselemente 22 vorgesehen, welche als kreisringförmige Scheibe ausgebildet sind und mit den Schaufelelementen 9 erster Art und den Schaufelelementen 12 zweiter Art verbunden sind.

Die Verstärkungselemente 22 erhöhen die Stabilität der Trommel 6, verringern die beim Betrieb entstehende Vibrationen und verhindern eine Biegung der Schaufelelemente 9 und 12 und folglich eine fliehkraftbedingte radiale Aufweitung des Durchmessers der Trommel 6.

## Patentansprüche

1. Prallvorrichtung (1) zur Inaktivierung von Insekten in einem schüttfähigen Futter- oder Lebensmittel mit einem Gehäuse (2), das jeweils wenigstens eine Einlassöffnung (3) und eine Auslassöffnung (4) für das zu behandelnde Gut aufweist, und einer in dem Gehäuse (2) um eine Drehachse (5) drehbar angeordneten Trommel (6), wobei zwischen zwei Stirnteilen (7, 8) der Trommel (6) eine Mehrzahl von sich in etwa parallel zur Drehachse (5) erstreckenden Schaufelelementen (9) erster Art mit einer Prallfläche (10) angeordnet ist, **dadurch gekennzeichnet, dass** die Trommel (6) teilweise umfänglich von einer Wand (11) des Gehäuses (2) umgeben ist, wobei die wenigstens eine Einlassöffnung (3) und die wenigstens eine Auslassöffnung (4) in der Wand (11) ausgebildet sind.

2. Vorrichtung (1) nach Anspruch 1, **dadurch gekennzeichnet, dass** die wenigstens eine Einlassöffnung (3) und die wenigstens eine Auslassöffnung (4) zueinander bezüglich der Drehachse (5) um mehr als 90° und weniger als 270°, vorzugsweise um etwa 180° versetzt angeordnet sind.

3. Vorrichtung (1) nach einem der Ansprüche 1 oder 2, **dadurch gekennzeichnet, dass** die Schaufelelemente (9) erster Art eine im Wesentlichen ebene Prallfläche (10) mit einer Breite zwischen 5 mm und 25 mm, insbesondere zwischen 10 mm und 20 mm, und einen im Wesentlichen viereckigen Querschnitt aufweisen.

4. Vorrichtung nach einem der vorhergehenden Ansprüche, **dadurch gekennzeichnet, dass** die Prallfläche (10) der Schaufelelemente (9) erster Art zwischen 0° und 45°, insbesondere zwischen 0° und 10° bezüglich eines Radius der Trommel (6) geneigt ist.

5. Vorrichtung (1) nach einem der vorhergehenden Ansprüche, **dadurch gekennzeichnet, dass** die Schaufelelemente (9) erster Art bezüglich der Drehachse (5) radial im Wesentlichen gleich beabstandet angeordnet sind.

6. Vorrichtung (1) nach einem der vorhergehenden Ansprüche, **dadurch gekennzeichnet, dass** benachbarte Schaufelelemente (9) erster Art voneinander im Wesentlichen gleich beabstandet angeordnet sind.

7. Vorrichtung (1) nach einem der vorhergehenden Ansprüche, **dadurch gekennzeichnet, dass** zwischen den Stirnteilen (7, 8) der Trommel (6) eine Mehrzahl von sich in etwa parallel zur Drehachse (5) erstreckenden Schaufelelementen (12) zweiter Art angeordnet ist.

8. Vorrichtung (1) nach Anspruch 7, **dadurch gekennzeichnet, dass** die Schaufelelemente (12) zweiter Art eine im Wesentlichen ebene Schaufelfläche (13) mit einer Breite zwischen 5 mm und 25 mm, insbesondere zwischen 10 mm und 20 mm, und eine schräge Fläche (15) aufweisen, wobei die Schaufelfläche (13) und die schräge Fläche (15) an einer Kante, vorzugsweise an einer scharfen Kante, treffen, die in einer Umdrehungsrichtung der Trommel zeigt, und insbesondere, dass die Schaufelelemente (12) zweiter Art einen im Wesentlichen trapezförmigen bzw. orthogonaltrapezförmigen Querschnitt aufweisen.

9. Vorrichtung nach einem der Ansprüche 7 oder 8, **dadurch gekennzeichnet, dass** die Schaufelfläche (13) der Schaufelelemente (12) zweiter Art zwischen 15° und 75°, insbesondere zwischen 40° und 60° bezüglich des Radius der Trommel geneigt ist.

10. Vorrichtung (1) nach einem der Ansprüche 7 bis 9, **dadurch gekennzeichnet, dass** die Schaufelelemente (12) zweiter Art bezüglich der Drehachse (5) radial im Wesentlichen gleich beabstandet angeordnet sind.

11. Vorrichtung (1) nach einem der Ansprüche 7 bis 10, **dadurch gekennzeichnet, dass** die Schaufelelemente (9) erster Art und die Schaufelelemente (12) zweiter Art in Umlaufrichtung der Trommel (6) jeweils abwechselnd angeordnet sind.

12. Vorrichtung (1) nach einem der Ansprüche 7 bis 11, **dadurch gekennzeichnet, dass** die Schaufelelemente (12) zweiter Art sich radial bezüglich der Drehachse (5) ausserhalb der Schaufelelemente (9) erster Art befinden.

13. Vorrichtung (1) nach Anspruch 12, **dadurch gekennzeichnet, dass** die Wand (11) im Bereich der wenigstens einen Einlassöffnung (3) und/oder der wenigstens einen Auslassöffnung (4) wenigstens ein Abstreifelemente (18, 19) aufweist, wobei die bezüglich der Drehachse radiale Spaltbreite zwischen dem wenigsten einen Abstreifelement (18, 19) und die Schaufelelement zweiter Art (12) zwischen 0,5 mm und 5 mm, insbesondere zwischen 1 mm und 3 mm beträgt.

14. Verfahren zur Inaktivierung von Insekten in einem schüttfähigen Futter- oder Lebensmittel, mit einer Vorrichtung nach einem der vorhergehenden Ansprüche, **dadurch gekennzeichnet, dass** es folgenden Schritt umfasst:
- Zuführen des zu behandelnden Gutes einer mit einer Mehrzahl von Prallflächen ausgestatteten, sich um eine Drehachse (5) drehenden Trommel (6) in im Wesentlichen bezüglich der Drehachse radialer Richtung.

## Claims

1. Impact device (1) for inactivating insects in a pourable feed or foodstuff, having a housing (2) which respectively comprises at least one inlet opening (3) and one outlet opening (4) for the material to be treated, and having a drum (6) which is arranged in the housing (2) such that it can rotate about an axis of rotation (5), a plurality of blade elements (9) of the first type having an impact surface (10) being arranged between two end parts (7, 8) of the drum (6) and extending approximately parallel to the axis of rotation (5), **characterized in that** the drum (6) is partially surrounded circumferentially by a wall (11) of the housing (2), the at least one inlet opening (3) and the at least one outlet opening (4) being formed in the wall (11).

2. Device (1) according to claim 1, **characterized in that** the at least one inlet opening (3) and the at least one outlet opening (4) are arranged offset to each other with respect to the axis of rotation (5) by more than 90° and less than 270°, preferably by about 180°.

3. Device (1) according to one of claims 1 or 2, **characterized in that** the blade elements (9) of the first type have a substantially planar impact surface (10) with a width between 5 mm and 25 mm, in particular between 10 mm and 20 mm, and a substantially quadrangular cross-section.

4. Device according to one of the preceding claims, **characterized in that** the impact surface (10) of the blade elements (9) of the first type is inclined between 0° and 45°, in particular between 0° and 10° with respect to a radius of the drum (6).

5. Device (1) according to one of the preceding claims, **characterized in that** the blade elements (9) of the first type are arranged at substantially equal radial distances with respect to the axis of rotation (5).

6. Device (1) according to any one of the preceding claims, **characterized in that** adjacent blade elements (9) of the first type are arranged at substantially equal distances from one another.

7. Device (1) according to one of the preceding claims, **characterized in that** a plurality of blade elements (12) of the second type extending approximately parallel to the axis of rotation (5) is arranged between the end parts (7, 8) of the drum (6).

8. Device (1) according to claim 7, **characterized in that** the blade elements (12) of the second type have a substantially flat blade surface (13) with a width between 5 mm and 25 mm, in particular between 10 mm and 20 mm, and an inclined surface (15), wherein the blade surface (13) and the inclined surface (15) meet at an edge, preferably at a sharp edge, which points in a direction of rotation of the drum, and in particular that the blade elements (12) of the second type have a substantially trapezoidal or orthogonal trapezoidal cross-section or orthogonal trapezoidal cross-section.

9. Device according to one of claims 7 or 8, **characterized in that** the blade surface (13) of the second type of blade elements (12) is inclined between 15° and 75°, in particular between 40° and 60° with respect to the radius of the drum.

10. Device (1) according to any one of claims 7 to 9, **characterized in that** the blade elements (12) of the second type are arranged at substantially equal radial distances with respect to the axis of rotation (5).

11. Device (1) according to one of claims 7 to 10, **characterized in that** the blade elements (9) of the first type and the blade elements (12) of the second type are each arranged alternately in the direction of rotation of the drum (6) .

12. Device (1) according to one of claims 7 to 11, **characterized in that** the blade elements (12) of the second type are located radially outside the blade elements (9) of the first type with respect to the axis of rotation (5).

13. Device (1) according to claim 12, **characterized in that** the wall (11) has at least one wiper element (18, 19) in the region of the at least one inlet opening (3) and/or the at least one outlet opening (4), the radial gap width, with respect to the axis of rotation, between the at least one wiper element (18, 19) and the blade element of the second type (12) being between 0.5 mm and 5 mm, in particular between 1 mm and 3 mm.

14. A method for inactivating insects in a pourable feed or food, comprising an apparatus according to any one of the preceding claims, **characterized in that** it comprises the following step:
- feeding the material to be treated to a drum (6) equipped with a plurality of impact surfaces and rotating about an axis of rotation (5) in a direction substantially radial with respect to the axis of rotation.

## Revendications

1. Dispositif d'impact (1) pour l'inactivation d'insectes dans un aliment ou un produit alimentaire en vrac, comprenant un boîtier (2) qui présente respectivement au moins une ouverture d'entrée (3) et une ouverture de sortie (4) pour le produit à traiter, et un tambour (6) disposé dans le boîtier (2) de manière à pouvoir tourner autour d'un axe de rotation (5), dans lequel, entre deux parties frontales (7, 8) du tambour (6), une pluralité d'éléments d'aube (9) de premier type avec une surface d'impact (10) s'étendant à peu près parallèlement à l'axe de rotation (5) est disposée, **caractérisé en ce que** le tambour (6) est entouré partiellement sur sa périphérie par une paroi (11) du boîtier (2), l'au moins une ouverture d'entrée (3) et l'au moins une ouverture de sortie (4) étant réalisées dans la paroi (11).

2. Dispositif (1) selon la revendication 1, **caractérisé en ce que** l'au moins une ouverture d'entrée (3) et l'au moins une ouverture de sortie (4) sont décalées l'une par rapport à l'autre de plus de 90° et de moins de 270°, de préférence d'environ 180°, par rapport à l'axe de rotation (5).

3. Dispositif (1) selon l'une des revendications 1 ou 2, **caractérisé en ce que** les éléments d'aube (9) de premier type présentent une surface d'impact (10) sensiblement plane, de largeur comprise entre 5 mm et 25 mm, notamment entre 10 mm et 20 mm, et de section transversale sensiblement quadrangulaire.

4. Dispositif selon l'une quelconque des revendications précédentes, **caractérisé en ce que** la surface d'impact (10) des éléments d'aube (9) de premier type est inclinée entre 0° et 45°, notamment entre 0° et 10° par rapport à un rayon du tambour (6).

5. Dispositif (1) selon l'une des revendications précédentes, **caractérisé en ce que** les éléments d'aube (9) de premier type sont disposés radialement à une distance sensiblement égale par rapport à l'axe de rotation (5).

6. Dispositif (1) selon l'une des revendications précédentes, **caractérisé en ce que** des éléments d'aube (9) du premier type adjacent sont disposés à une distance sensiblement égale les uns des autres.

7. Dispositif (1) selon l'une des revendications précédentes, **caractérisé en ce qu'**entre les parties frontales (7, 8) du tambour (6) est disposée une pluralité d'éléments d'aubes (12) de deuxième type s'étendant à peu près parallèlement à l'axe de rotation (5).

8. Dispositif (1) selon la revendication 7, **caractérisé en ce que** les éléments d'aube (12) de deuxième type comprennent une surface d'aube (13) sensiblement plane ayant une largeur comprise entre 5 mm et 25 mm, en particulier entre 10 mm et 20 mm, et une surface inclinée (15), la surface d'aube (13) et la surface inclinée (15) se rencontrent au niveau d'un bord, de préférence au niveau d'un bord vif, qui est orienté dans une direction de rotation du tambour, et en particulier **en ce que** les éléments d'aube (12) de deuxième type ont une forme de section transversale sensiblement trapézoïdale, respectivement trapézoïdale orthogonale.

9. Dispositif selon l'une des revendications 7 ou 8, **caractérisé en ce que** la surface d'aube (13) des éléments d'aube (12) de deuxième type est inclinée entre 15° et 75°, notamment entre 40° et 60° par rapport au rayon du tambour.

10. Dispositif (1) selon l'une des revendications 7 à 9, **caractérisé en ce que** les éléments d'aubes (12) de deuxième type sont disposés radialement à une distance sensiblement égale par rapport à l'axe de rotation (5).

11. Dispositif (1) selon l'une des revendications 7 à 10, **caractérisé en ce que** les éléments d'aubes (9) de premier type et les éléments d'aubes (12) de deuxième type sont respectivement disposés en alternance dans le sens de rotation du tambour (6).

12. Dispositif (1) selon l'une des revendications 7 à 11, **caractérisé en ce que** les éléments d'aubes (12) de deuxième type sont situés radialement par rapport à l'axe de rotation (5) à l'extérieur des éléments d'aubes (9) de premier type.

13. Dispositif (1) selon la revendication 12, **caractérisé en ce que** la paroi (11) présente au moins un élément racleur (18, 19) dans la zone de l'au moins une ouverture d'entrée (3) et/ou de l'au moins une ouverture de sortie (4), la largeur de fente radiale par rapport à l'axe de rotation entre l'au moins un élément racleur (18, 19) et l'élément d'aube de deuxième type (12) étant comprise entre 0,5 mm et 5 mm, en particulier entre 1 mm et 3 mm.

14. Procédé d'inactivation d'insectes dans un aliment ou un produit alimentaire en vrac, comprenant un dispositif selon l'une des revendications précédentes, **caractérisé en ce qu'**il comprend l'étape suivante :
- l'amenée du produit à traiter à un tambour (6) équipé d'une pluralité de surfaces d'impact et tournant autour d'un axe de rotation (5) dans une direction sensiblement radiale par rapport à l'axe de rotation.
